# EUROPÄISCHE PATENTSCHRIFT

(11) **EP 3 077 142 B1**
(45) Veröffentlichungstag und Bekanntmachung des Hinweises auf die Patenterteilung: **08.09.2021**
(21) Anmeldenummer: 14835650.4
(22) Anmeldetag: 01.12.2014
(51) Int. Cl.: B23B 27/16

(54) **SCHNEIDEINSATZ ZUR ZERSPANENDEN DREHBEARBEITUNG**
ROTARY MACHINING CUTTING INSERT
PLAQUETTE DE COUPE POUR L'USINAGE AU TOUR

(30) Priorität: 02.12.2013 AT 4042013 U
(43) Veröffentlichungstag der Anmeldung: 12.10.2016
(73) Patentinhaber: Ceratizit Austria Gesellschaft m.b.H., 6600 Reutte (AT)
(72) Erfinder: URSCHITZ, Harald, A-6600 Breitenwang (AT)
(74) Vertreter: Ciesla, Dirk
(86) Internationale Anmeldenummer: PCT/AT2014/000213
(87) Internationale Veröffentlichungsnummer: WO 2015/081353

(56) Entgegenhaltungen:
- EP-A1- 0 066 091
- EP-A1- 2 446 990
- EP-A2- 0 315 610
- WO-A1-01/60554
- WO-A1-2013/146211
- FR-A5- 2 158 984
- US-A- 5 743 681

## Beschreibung

Die vorliegende Erfindung betrifft einen Schneideinsatz gemäß dem Oberbegriff des Anspruchs 1 zur zerspanenden

Drehbearbeitung eines Werkstücks. EP2446990A1 offenbart ein Beispiel eines solchen Schneideinsatzes.

Bei der zerspanenden Bearbeitung von Werkstücken, insbesondere von metallischen Werkstücken, durch Drehen ist es üblich, Schneideinsätze zu verwenden, die an einem Schneideinsatzhalter befestigt sind, der in einer Werkzeugmaschine gehalten ist. Dabei ist der Schneideinsatzhalter üblicherweise aus einem Werkzeugstahl gefertigt und der Schneideinsatz kann z.B. durch eine ein Durchgangsloch in dem Schneideinsatz durchgreifende Befestigungsschraube oder durch eine Klemmpratze, die mit einer Oberseite des Schneideinsatzes zusammenwirkt, an dem Schneideinsatzhalter gehalten sein.

Der Schneideinsatz kann dabei insbesondere aus Hartmetall, Cermet oder einer Schneidkeramik, wie insbesondere CBN (kubischem Bornitrid) oder PKD (polykristallinem Diamant), ausgebildet und gegebenenfalls mit einer Beschichtung versehen sein, die z.B. mittels eines PVD-Verfahrens oder eines CVD-Verfahrens aufgebracht sein kann. Die Schneidkanten, die zur zerspanenden Bearbeitung des Werkstücks mit dem Werkstück in Eingriff gebracht werden, sind bei solchen Werkzeugen an dem Schneideinsatz ausgebildet. Es ist insbesondere auch bekannt, die Schneideinsätze als sogenannte indexierbare Schneideinsätze auszubilden, die eine Mehrzahl von individuell einsetzbaren Schneidkanten oder Schneidkantenabschnitten aufweisen, die durch Drehen und/oder Wenden nacheinander in eine aktive Stellung gebracht werden können, wenn die vorangehende Schneidkante bzw. der vorangehende Schneidkantenabschnitt abgenutzt ist.

Um eine hohe Qualität der erzeugten Werkstückoberfläche zu erzielen, ist es nötig, die bei der Drehbearbeitung entstehenden Späne gezielt zu lenken und abzuführen. Um dies zu erreichen, ist es bekannt, an dem Schneideinsatz spanbeeinflussende Strukturen auszubilden, die spanleitende, spanformende und/oder spanbrechende Eigenschaften haben. Während es relativ einfach ist, für eine bestimmte Kombination von Vorschub und Spantiefe bei der Drehbearbeitung geeignete spanbeeinflussende Strukturen auszubilden, stellt es eine große Schwierigkeit dar, für eine große Bandbreite an verschiedenen Vorschüben und/oder Spantiefen eine geeignete Spanbeeinflussung zu erreichen.

WO 01/60554 A1 beschreibt eine aus polykristallinem Diamant gebildete Spanleitstufengestaltung, wobei verschiedene, teilweise komplexe Gestaltungen gezeigt sind.

WO 2013/146211 A1 beschreibt eine Spanfläche, auf der eine Fase und eine Spanbrechervertiefung ausgebildet sind, wobei die Spanbrechervertiefung einen Spanbrecher aufweist und wobei eine Mehrzahl von Rückenbereichen auf einer abfallenden Fläche an einer der Fase zugewandten Seite der Spanbrechervertiefung ausgebildet ist.

Es ist Aufgabe der vorliegenden Erfindung, einen Schneideinsatz zur zerspanenden Drehbearbeitung eines Werkstücks bereitzustellen, der insbesondere zum Kopierdrehen geeignet ist und sowohl bei einer Feinzerspanung bzw. als auch bei einer mittleren Zerspanung eine vorteilhafte Spanbeeinflussung erzielt.

Die Aufgabe wird durch einen Schneideinsatz zur zerspanenden Drehbearbeitung eines Werkstücks nach Anspruch 1 gelöst. Vorteilhafte Weiterbildungen sind in den abhängigen Ansprüchen angegeben.

Da der Wulst im Bereich der Schneidecke zwischen der Schneidkante und dem Spangrund auf der Spanfläche ausgebildet ist, wird bei einer Feinzerspanung durch den Wulst insbesondere beim Kopierdrehen eine hervorragende Spanverformung erzielt. Der Wulst kann dabei z.B. derart ausgebildet sein, dass er relativ zu der Unterseite des Schneideinsatzes auf ein höheres Niveau als die Spanfläche vor dem Wulst ansteigt, oder aber z.B. auch derart, dass an der der Schneidkante zugewandten Seite des Wulstes die Neigung der Spanfläche verringert und auf der von der Schneidkante abgewandten Seite des Wulstes die Neigung der Spanfläche wieder vergrößert ist, ohne dass sich der Wulst über das Niveau der Spanfläche vor dem Wulst erhebt. Da der Wulst in einer Richtung senkrecht zur Schneidkante von der Schneidkante zu dem Inneren des Schneideinsatzes vor dem Spangrund angeordnet ist, wird auch bei einer mittleren Zerspanung eine hervorragende Spanverformung erzielt. Der Wulst erstreckt sich durchgängig im Bereich der Schneidecke bis in die Bereiche der daran anschließenden Schneidkantenabschnitte.

Obwohl in der vorliegenden Beschreibung die Begriffe Oberseite und Unterseite zur Bezeichnung der Seiten des Schneideinsatzes verwendet werden, versteht es sich, dass dies nur zu Zwecken der Erläuterung erfolgt und je nach Ausrichtung des Schneideinsatzes, die Oberseite z.B. auch unten oder seitlich und die Unterseite z.B. auch oben oder seitlich zur Anordnung gelangen kann. Der Schneideinsatz kann dabei insbesondere auch als indexierbarer Schneideinsatz mit einer Mehrzahl von unabhängig voneinander, nacheinander verwendbaren Schneidecken und daran anschließenden Schneidkantenabschnitten ausgebildet sein. Dabei können die Schneidecken und an diese anschließenden Schneidkantenabschnitte z.B. nur an der Schnittlinie zwischen der Seitenfläche und der Oberseite ausgebildet sein oder z.B. aber zusätzlich auch an der Schnittlinie zwischen der Seitenfläche und der Unterseite Schneidecken und daran anschließende Schneidkantenabschnitte ausgebildet sein. Der Schneideinsatz kann dabei bevorzugt aus Hartmetall, Cermet oder einer Schneidkeramik gebildet sein. Der Schneideinsatz kann ferner z.B. mit einem Durchgangsloch für eine Befestigungsschraube versehen oder z.B. für eine Befestigung an einem Schneideinsatzhalter mit einer Klemmvorrichtung, insbesondere z.B. einer Klemmpratze, ausgebildet sein. Es ist ferner möglich, an der Schneidkante über deren gesamte Länge oder aber auch nur bereichsweise zur Verstärkung eine Fase vorzusehen.

Der Wulst erstreckt sich in Aufsicht auf die Oberseite bananenförmig im Bereich der Schneidecke. Der Wulst erstreckt sich dabei bananenförmig bis in die Bereiche der anschließenden Schneidkantenabschnitte. Der Wulst kann dabei z.B. im Wesentlichen parallel zur Schneidkante ausgebildet sein oder sich aber z.B. auch in den Bereichen der anschließenden Schneidkantenabschnitte zunehmend von der Schneidkante entfernen. Durch die bananenförmige Ausgestaltung des Wulstes wird bei einer Feinzerspanung auch bei verschiedenen relativen Ausrichtungen des Schneideinsatzes zu dem zu bearbeitenden Werkstück, jeweils eine hervorragende Spankontrolle bereitgestellt.

Gemäß einer Weiterbildung weist der Wulst in Aufsicht auf die Oberseite entlang der Schneidecke und der anschließenden Schneidkantenabschnitte in der Richtung senkrecht zur Schneidkante eine im Wesentlichen gleichbleibende Breite auf. Diese Ausgestaltung ermöglicht eine hervorragende Spankontrolle bei unterschiedlichen relativen Ausrichtungen zwischen Schneideinsatz und Werkstück.

Gemäß einer Weiterbildung schließt sich in der Richtung von der Schneidkante zum Inneren des Schneideinsatzes an den Spangrund eine ansteigende Flanke an. In diesem Fall wird auch bei mittleren Zerspanungsparametern eine hervorragende Spankontrolle gewährleistet.

Wenn die ansteigende Flanke auf ein Höhenniveau oberhalb der Höhe der Schneidkante ansteigt, wird dabei eine vorteilhafte Spanformung erreicht.

Bevorzugt erstreckt sich der Wulst im Bereich der Schneidecke und der anschließenden Schneidkantenabschnitte im Wesentlichen parallel zu der Schneidkante. In diesem Fall wird insbesondere bei einem Kopierdrehen eine vorteilhafte Spanbeeinflussung bereitgestellt.

Gemäß einer Ausgestaltung fällt die Spanfläche sowohl im Bereich der Schneidecke als auch in den Bereichen der anschließenden Schneidkantenabschnitte in einer Richtung senkrecht zu der Schneidkante zum Inneren des Schneideinsatzes zunächst geneigt in Richtung der Unterseite ab, an dem Wulst nimmt die Neigung der Spanfläche ab oder die Spanfläche steigt wieder gegenüber der Unterseite an und nach dem Wulst fällt die Spanfläche bis zu dem Spangrund in Richtung der Unterseite ab.

Gemäß einer Weiterbildung weist der Schneideinsatz in Aufsicht auf die Oberseite eine im Wesentlichen polygonale Grundform mit einer Mehrzahl von nacheinander einsetzbaren Schneidecken mit jeweils beidseitig daran anschließenden Schneidkantenabschnitten auf. Insbesondere kann der Schneideinsatz in Aufsicht auf die Oberseite eine im Wesentlichen dreieckige, viereckige oder parallelogrammartige Grundform aufweisen.

Gemäß einer Weiterbildung sind im Bereich der Schneidecke und/oder der anschließenden Schneidkantenabschnitte erhabene, spanformende Elemente angeordnet, die sich quer zur Richtung der Schneidkante erstrecken und jeweils eine Erhöhung der Spanfläche und des Spangrundes bilden. In diesem Fall wird bei einer Bearbeitung mit höheren Vorschüben ein vorteilhafter Spanbruch erzielt. Die spanformenden Elemente können sich dabei insbesondere in etwa senkrecht zu der Schneidkante in dem jeweiligen Bereich erstrecken. Eine exakt senkrechte Ausrichtung ist jedoch nicht zwingend. Es können z.B. nur im Bereich der Schneidecke oder nur im Bereich der daran anschließenden Schneidkantenabschnitte ein oder mehrere solcher spanformenden Elemente vorgesehen sein oder es können auch sowohl im Bereich der Schneidecke und im Bereich der daran anschließenden Schneidkantenabschnitte solche spanformenden Elemente vorgesehen sein. Die Bezeichnung Erhöhung der Spanfläche bzw. des Spangrundes bezieht sich dabei wiederum auf die relative Höhe zu der Haupterstreckungsebene der Unterseite des Schneideinsatzes.

Die spanformenden Elemente sind bevorzugt auf der von der Schneidkante abgewandten Seite des Wulstes angeordnet.

Weitere Vorteile und Zweckmäßigkeiten der Erfindung ergeben sich anhand der nachfolgenden Beschreibung von Ausführungsbeispielen unter Bezugnahme auf die beigefügten Figuren.

### Von den Figuren zeigen:

- Fig. 1:: eine schematische perspektivische Darstellung eines Schneideinsatzes gemäß einer ersten Ausführungsform;
- Fig. 2:: eine vergrößerte Darstellung des Details II aus Fig. 1;
- Fig. 3:: eine vergrößerte Darstellung des Details III aus Fig. 1;
- Fig. 4:: eine schematische Aufsicht auf den Schneideinsatz gemäß der ersten Ausführungsform;
- Fig. 5:: einen Schnitt entlang der Linie V-V von Fig. 4;
- Fig. 6:: eine vergrößerte Darstellung des Details VI von Fig. 5;
- Fig. 7:: einen Schnitt entlang der Linie VII-VII von Fig. 4;
- Fig. 8:: eine vergrößerte Darstellung des Details VIII von Fig. 7;
- Fig. 9:: eine schematische Darstellung des Schneideinsatzes gemäß der ersten Ausführungsform im Einsatz;
- Fig. 10:: eine schematische perspektivische Darstellung eines Schneideinsatzes gemäß einer zweiten Ausführungsform, die nicht Teil der Erfindung ist
- Fig. 11:: eine vergrößerte Darstellung des Details XI von Fig. 10;
- Fig. 12:: eine schematische Aufsicht auf den Schneideinsatz gemäß der zweiten Ausführungsform;
- Fig. 13:: einen Schnitt entlang der Linie XIII-XIII in Fig. 12;
- Fig. 14:: eine vergrößerte Darstellung des Details XIV von Fig. 13;
- Fig. 15:: einen Schnitt entlang der Linie XV-XV in Fig. 12; und
- Fig. 16:: eine vergrößerte Darstellung des Details XVI von Fig. 15.

### ERSTE AUSFÜHRUNGSFORM

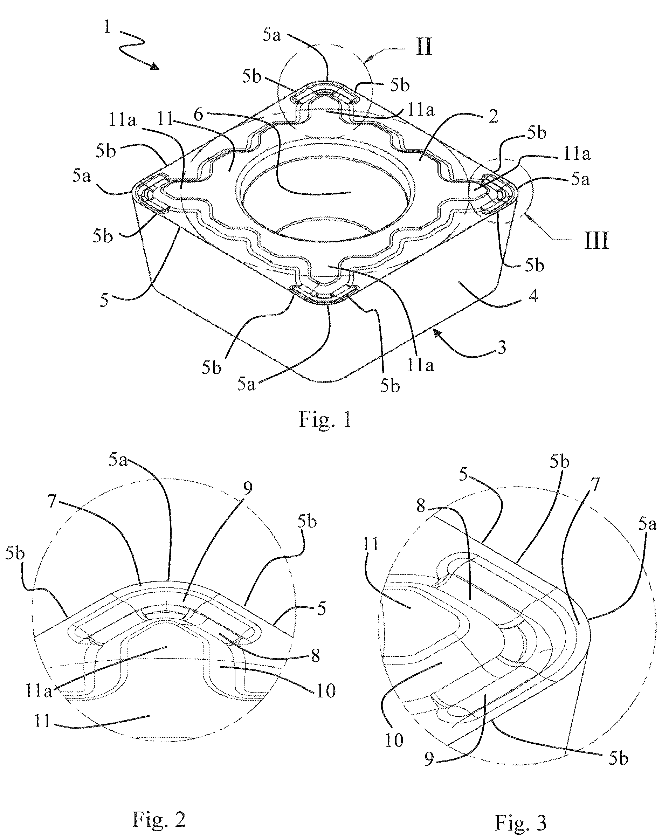

Eine erste Ausführungsform wird im Folgenden unter Bezug auf die Fig. 1 bis Fig. 9 eingehender beschrieben.

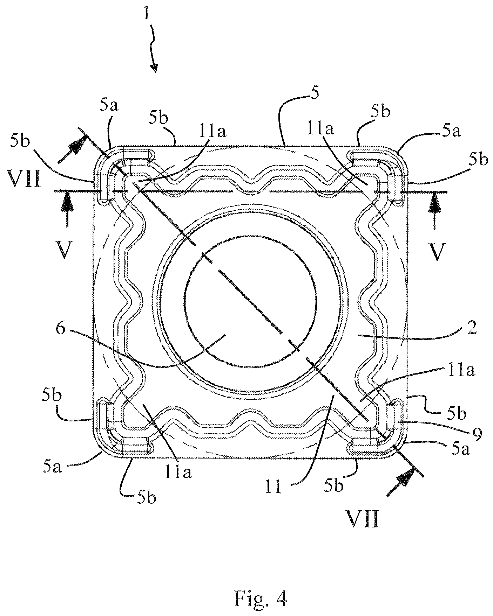

Der Schneideinsatz 1 zur zerspanenden Drehbearbeitung eines Werkstücks gemäß der ersten Ausführungsform weist eine Oberseite 2, eine Unterseite 3 und eine umlaufende Seitenfläche 4 auf. Bei der Ausführungsform weist der Schneideinsatz 1 in Aufsicht auf die Oberseite 2 eine im Wesentlichen quadratische Grundform auf, wie insbesondere in Fig. 4 zu sehen ist.

An einer Schnittlinie zwischen der Seitenfläche 4 und der Oberseite 2 ist eine Schneidkante 5 ausgebildet. Bei der ersten Ausführungsform ist der Schneideinsatz 1 als einseitiger Schneideinsatz ausgebildet, bei dem nur zwischen der Seitenfläche 4 und der Oberseite 2 eine Schneidkante 5 ausgebildet ist. Es ist bei einer Abwandlung jedoch auch möglich, dass auch an der Schnittlinie zwischen der Seitenfläche 4 und der Unterseite 3 eine weitere Schneidkante ausgebildet ist, sodass der Schneideinsatz auch als doppelseitiger Schneideinsatz ausgebildet sein kann.

Die Schneidkante 5 weist eine Mehrzahl von Schneidecken 5a und jeweils beidseitig an diese anschließende Schneidkantenabschnitte 5b auf, wie insbesondere in Fig. 1 und Fig. 4 zu sehen ist. Bei der Ausführungsform, bei der der Schneideinsatz 1 eine im Wesentlichen quadratische Grundform aufweist, sind an der Schnittlinie zwischen der Seitenfläche 4 und der Oberseite 2 insgesamt vier Schneidecken 5a ausgebildet, an die sich jeweils beidseitig Schneidkantenabschnitte 5b anschließen. Es ist jedoch auch eine andere Anzahl an Schneidecken 5a möglich, z.B. können bei einem Schneideinsatz mit einer im Wesentlichen dreieckigen Grundform drei Schneidecken 5a an der Oberseite 2 ausgebildet sein, bei einem Schneideinsatz mit einer im Wesentlichen parallelogrammartigen Grundform zwei gleiche Schneidecken 5a. In einem Fall eines doppelseitigen Schneideinsatzes, bei dem auch an der Schnittlinie zwischen der Seitenfläche 4 und der Unterseite 3 eine Schneidkante 5 vorgesehen ist, kann diese z.B. identisch zu der Schneidkante 5 ausgebildet sein, die zwischen der Seitenfläche 4 und der Oberseite 2 ausgebildet ist.

Die Schneidecken 5a weisen in Aufsicht auf die Oberseite eine abgerundete Form auf und können z.B. eine kreisbogenförmige Ausgestaltung mit einem Radius haben. Bei der Ausführungsform weisen die an die jeweilige Schneidecke 5a anschließenden Schneidkantenabschnitte 5b jeweils in Aufsicht auf die Oberseite 2 eine im Wesentlichen geradlinige Form auf und schließen sich unmittelbar an die abgerundete Form der Schneidecke 5a an. Die Schneidkantenabschnitte 5b können sich dabei über jeweils etwa die Hälfte der Strecke zu der benachbarten Schneidecke 5a erstrecken.

Da der Schneideinsatz 1 im Bereich der Schneidecken 5a jeweils identisch ausgebildet ist, wird zur Erleichterung der Beschreibung im Folgenden nur eine der Schneidecken 5a eingehender beschrieben. Obwohl im Folgenden eine Ausgestaltung des Schneideinsatzes 1 beschrieben wird, bei der die Schneidkante 5 ohne Fase ausgebildet ist, ist es z.B. auch möglich, dass entlang der gesamten Schneidkante 5 oder entlang von Teilbereichen der Schneidkante 5 in allgemein bekannter Weise zur Verstärkung der Schneidkante 5 eine Fase ausgebildet ist. Die Breite der Fase und der Winkel der Fase können dabei über den Verlauf der Schneidkante 5 konstant oder aber auch veränderlich ausgebildet sein.

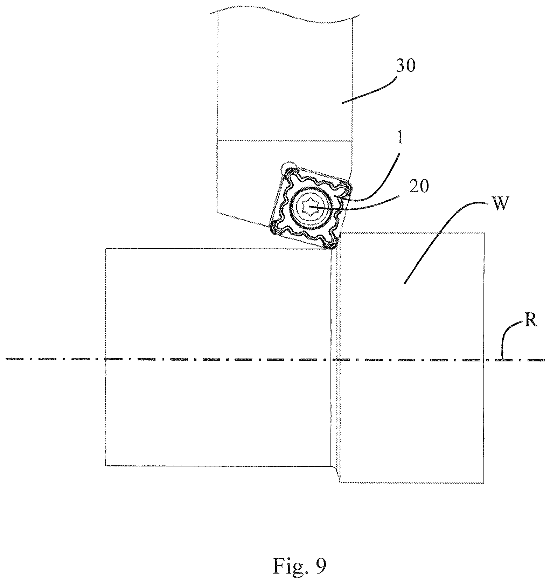

Wie insbesondere in den Fig. 1, Fig. 4 und Fig. 7 zu erkennen ist, weist der Schneideinsatz 1 eine Durchgangsbohrung 6 zur Aufnahme einer Befestigungsschraube 20 auf, mit der der Schneideinsatz 1 in einer Aufnahme eines Schneideinsatzhalters 30 befestigbar ist, wie in Fig. 9 schematisch dargestellt ist. Wie in Fig. 9 zu sehen ist, ist der Schneideinsatz 1 dabei dazu ausgebildet, bei einer Drehbearbeitung eines Werkstücks W, das um eine Rotationsachse R rotiert wird, mit einer Schneidecke 5a, die in einer aktiven Position angeordnet ist, und an diese anschließenden Schneidkantenabschnitten 5b einen zerspanenden Materialabtrag auszuführen. Die Oberseite 2 des Schneideinsatzes 1 dient dabei in ihrem an die Schneidkante 5 angrenzenden Bereich als Spanfläche, wohingegen die Seitenfläche 4 als Freifläche dient.

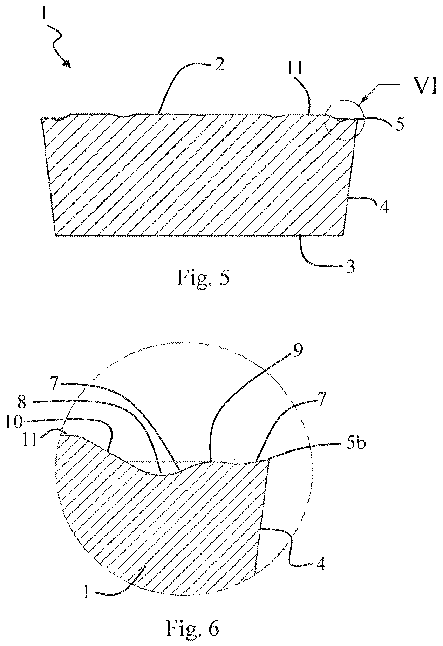

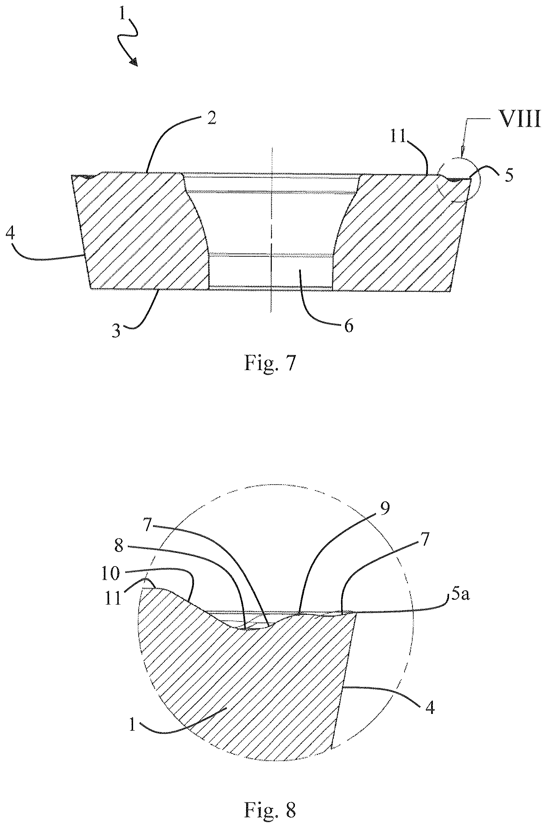

Im Folgenden wird unter Bezug auf die Fig. 3 und Fig. 5 bis Fig. 8 der an die Schneidecke 5a und die daran anschließenden Schneidkantenabschnitte 5b angrenzende Bereich der Oberseite 2 eingehender beschrieben. Wie in den Fig. 4, Fig. 5 und Fig. 6 zu erkennen ist, ist Fig. 5 ein Schnitt durch den Schneideinsatz 1 entlang einer Linie senkrecht zu der Schneidkante 5 im Bereich eines Schneidkantenabschnitts 5b. Wie in den Fig. 4, Fig. 7 und Fig. 8 zu erkennen ist, ist Fig. 7 ein Schnitt durch den Schneideinsatz 1 entlang einer Linie senkrecht zu der Schneidkante 5 in der Mitte einer Schneidecke 5a.

Zunächst wird der Verlauf der Oberseite 2 in dem an die Schneidkante 5 angrenzenden Bereich unter Bezug auf Fig. 3 erläutert.

Wie in Fig. 3 zu sehen ist, ist die Oberseite 2 unmittelbar an die Schneidkante 5 angrenzend als eine Spanfläche 7 ausgebildet, die sich mit zunehmendem Abstand von der Schneidkante 5 der Unterseite 3 nähert, d.h. in Richtung der Unterseite 3 abfällt. Der Winkel zwischen der Spanfläche 7 und der Seitenfläche 4 bildet dabei den bei der Drehbearbeitung zum Einsatz kommenden Keilwinkel. In dem Fall einer an der Schneidkante 5 ausgebildeten Fase schließt sich die Spanfläche 7 an die Fase der Schneidkante 5 an.

Zumindest im Bereich der Schneidecke 5a erstreckt sich die Spanfläche 7 in einer Richtung senkrecht zu der Schneidkante 5 zu dem Inneren des Schneideinsatzes 1 jeweils bis zu einem Spangrund 8, an dem die Oberseite 2 den geringsten Abstand zu der Haupterstreckungsebene der Unterseite 3 aufweist. Für den Bereich der Schneidkante 5 in einem an die Schneidecke 5a anschließenden Schneidkantenabschnitt 5b ist dies z.B. in Fig. 6 zu sehen. Für den Bereich der Schneidkante 5 an der Schneidecke 5a ist dies z.B. in Fig. 8 zu sehen.

Auf der von der Schneidkante 5 in dem jeweiligen Bereich abgewandten Seite schließt sich an den Spangrund 8 eine ansteigende Flanke 10 an, die mit zunehmendem Abstand von der Schneidkante 5 ansteigt. Die ansteigende Flanke 10 steigt bis zu einem Höhenniveau an, das oberhalb des Niveaus der Schneidkante 5 liegt, wie insbesondere in Fig. 6 und Fig. 8 zu sehen ist. Die ansteigende Flanke 10 erstreckt sich dabei bis zu einer Plateaufläche 11, die eine Haupterstreckungsebene der Oberseite 2 bestimmt. Wie insbesondere in Fig. 1 und Fig. 4 zu sehen ist, ist die Oberseite 2 des Schneideinsatzes 1 derart ausgebildet, dass die Plateaufläche 11 in den Bereichen der Schneidecken 5a jeweils Teilflächen 11a aufweist, die in Richtung der Schneidecke 5a fingerartig vorspringen.

Wie ferner insbesondere in den Fig. 2 und Fig. 3 zu sehen ist, weist die Spanfläche 7 ferner im Bereich der Schneidecke 5a und der daran anschließenden Schneidkantenabschnitte 5b einen gegenüber dem Rest der Spanfläche 7 vorspringenden, konvexen Wulst 9 auf. Der Wulst 9 erstreckt sich dabei mit einer im Wesentlichen konstanten Breite (gemessen in der Richtung jeweils senkrecht zu der Schneidkante 5 in dem jeweiligen Bereich) entlang der Schneidecke 5a und zumindest über einen Teilbereich der daran anschließenden Schneidkantenabschnitte 5b. Der Wulst 9 weist - in Aufsicht auf die Oberseite 2 betrachtet - eine bananenförmige Form auf und bildet relativ zu der Grundausrichtung der Spanfläche 7 eine Erhebung. Im Bereich der an die Schneidecke 5a anschließenden Schneidkantenabschnitte 5b in Richtung zu den benachbarten Schneidecken 5a läuft der Wulst 9 aus, sodass er sich nur über einen unmittelbar an die Schneidecke 5a anschließenden Teilbereich der Schneidkantenabschnitte 5b erstreckt.

Bei dem in den Figuren dargestellten Ausführungsbeispiel erstreckt sich der Wulst 9 im Bereich der Schneidecke 5a und der daran anschließenden Schneidkantenabschnitte 5b zumindest im Wesentlichen parallel zu der Schneidkante 5 und beabstandet zu der Schneidkante 5. Gemäß einer Abwandlung ist es z.B. jedoch auch möglich, dass sich der Abstand des Wulstes 9 von der Schneidkante 5 mit zunehmendem Abstand von der Schneidecke 5a vergrößert. Bei dem konkret dargestellten Ausführungsbeispiel weist der Wulst 9 ferner relativ zu dem Rest der Spanfläche 7 eine über seine Erstreckung entlang der Schneidkante 5 im Wesentlichen konstante Höhe auf. Gemäß einer Abwandlung ist es z.B. jedoch auch möglich, dass der Wulst 9 eine veränderliche Höhe aufweist.

Der Wulst 9 ist als Teil der Spanfläche 7 in einem Bereich zwischen der Schneidkante 5 und dem Spangrund 8 ausgebildet, wie insbesondere in den vergrößerten Schnittdarstellungen in Fig. 6 und Fig. 8 zu sehen ist.

Wie in Fig. 6 und Fig. 8 zu erkennen ist, fällt die Spanfläche 7 in einer Richtung senkrecht zu der Schneidkante 5 zu einem Inneren des Schneideinsatzes 1 ausgehend von der Schneidkante 5 (bzw. einer an der Schneidkante 5 ausgebildeten Fase, sofern vorhanden) zunächst bis zu dem Wulst 9 in Richtung der Unterseite 3 des Schneideinsatzes 1 ab. An dem Wulst 9 verringert sich die Neigung der Spanfläche 7. Dabei ist es z.B. möglich, dass die Spanfläche 7 an dem Wulst 9 wieder auf ein höheres Niveau relativ zu der Unterseite 3 ansteigt, als vor dem Wulst 9, oder aber auch, dass die Spanfläche 7 z.B. in diesem Bereich im Wesentlichen parallel zu der Unterseite 3 verläuft oder nur schwach in Richtung der Unterseite 3 abfällt. Nach einer Scheitellinie des Wulstes 9 nimmt die Neigung der Spanfläche 7 wieder zu und die Spanfläche 7 fällt bis zu dem Höhenniveau des Spangrundes 8 ab. Der Spangrund 8 befindet sich dabei auf einem Höhenniveau relativ zu der Unterseite 3, das unterhalb des Höhenniveaus der Spanfläche 7 unmittelbar vor dem Wulst 9 ist. Der Wulst 9 ist in der Richtung senkrecht zu der Schneidkante 5 konvex gerundet ausgebildet, wie in den Fig. 6 und Fig. 8 zu erkennen ist.

### ZWEITE AUSFÜHRUNGSFORM BETREFFEND EINEN NICHT BEANSPRUCHTEN SCHNEIDEINSATZ

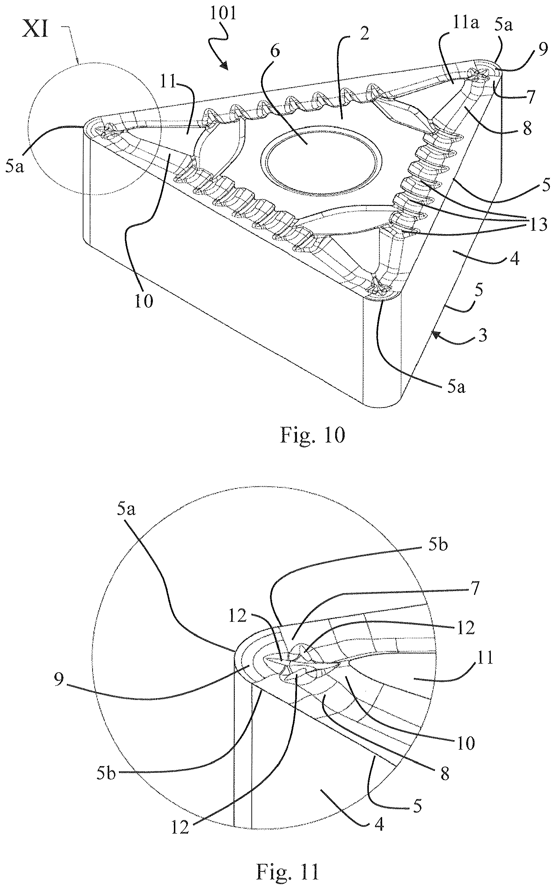

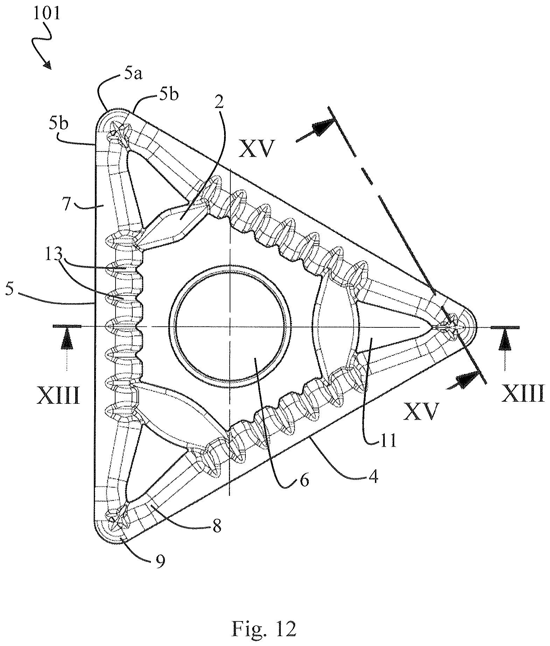

Eine zweite Ausführungsform, die nicht zur beanspruchten Erfindung gehört, wird im Folgenden mit Bezug auf die Fig. 10 bis Fig. 16 beschrieben.

Zur Beschreibung des Schneideinsatzes 101 zur zerspanenden Drehbearbeitung eines Werkstücks gemäß der zweiten Ausführungsform werden im Folgenden zur Bezeichnung entsprechender Funktionsbereiche dieselben Bezugszeichen verwendet, wie bei dem Schneideinsatz 1 gemäß der ersten Ausführungsform. Ferner werden zur Vermeidung von Wiederholungen nicht sämtliche Funktionsbereiche erneut beschrieben, sondern es werden lediglich die Unterschiede gegenüber dem Schneideinsatz 1 gemäß der ersten Ausführungsform hervorgehoben.

Im Unterschied zu dem Schneideinsatz 1 gemäß der ersten Ausführungsform weist der Schneideinsatz 101 gemäß der zweiten Ausführungsform eine - in Aufsicht auf die Oberseite 2 - im Wesentlichen dreieckige Grundform auf. Der Schneideinsatz 101 ist als doppelseitiger Schneideinsatz ausgebildet, bei dem sowohl an der Schnittlinie zwischen der Seitenfläche 4 mit der Oberseite 2 eine Schneidkante 5 ausgebildet ist, als auch an einer Schnittlinie zwischen der Seitenfläche 4 mit der Unterseite 3 eine Schneidkante 5 ausgebildet ist. Da die Oberseite 2 und die Unterseite 3 bei dem Schneideinsatz 101 im Wesentlichen identisch ausgebildet sind, wird zur Vermeidung von Wiederholungen auch auf eine eingehende Beschreibung der Unterseite 3 verzichtet.

Aufgrund der doppelseitigen Ausbildung und der dreieckigen Grundform weist der Schneideinsatz 101 gemäß der zweiten Ausführungsform insgesamt sechs Schneidecken 5a auf, drei an der Schnittlinie zwischen der Seitenfläche 4 und der Oberseite 2, drei an der Schnittlinie zwischen der Seitenfläche 4 und der Unterseite 3. Beidseitig schließen sich an die Schneidecken 5a, die in Aufsicht eine abgerundete Form aufweisen, jeweils Schneidkantenabschnitte 5b an, die auch bei der zweiten Ausführungsform im Wesentlichen geradlinig ausgebildet sind.

Die Ausgestaltung der Oberseite 2 in dem an die Schneidkante 5 angrenzenden Bereich bei dem Schneideinsatz 101 wird im Folgenden unter Bezug auf die Fig. 11, Fig. 12, Fig. 14 und Fig. 16 eingehender beschrieben. Da der Schneideinsatz 101 bezüglich einer Rotation um die Längsachse des Durchgangslochs 6 eine dreizählige Rotationssymmetrie aufweist, wird wiederum beispielhaft nur eine der Schneidecken 5a eingehender beschrieben.

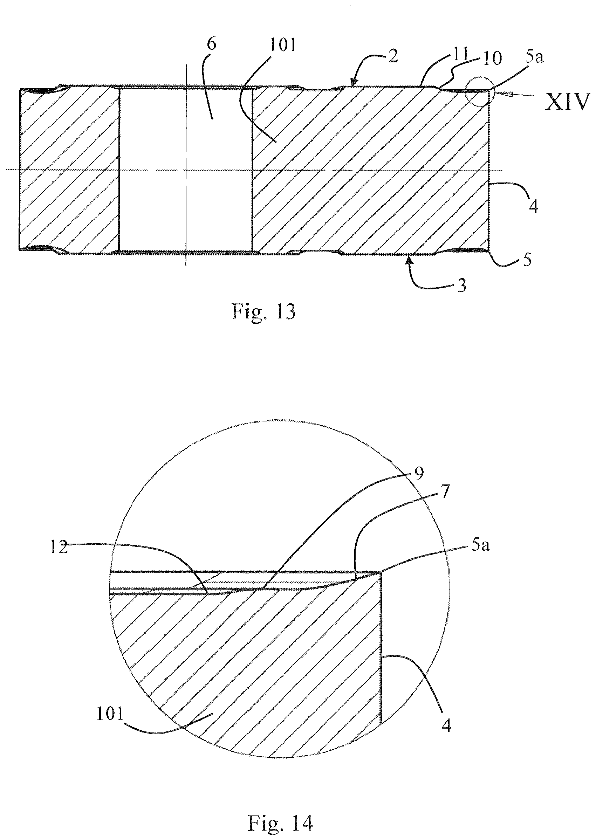

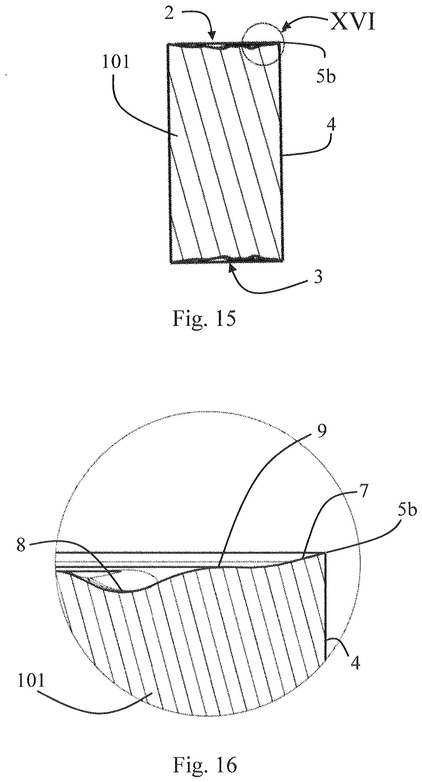

Fig. 13 ist eine Schnittdarstellung in einer Richtung senkrecht zu der Schneidecke 5a. Der Bereich der Schneidecke 5a ist dabei in Fig. 14 vergrößert dargestellt. Entsprechend ist Fig. 15 eine Schnittdarstellung in einer Richtung senkrecht zu einem an die Schneidecke 5a anschließenden Schneidkantenabschnitt 5b. Der Bereich angrenzend an den Schneidkantenabschnitt 5b ist dabei in Fig. 16 vergrößert dargestellt.

Wie in Fig. 14 zu sehen ist, fällt auch bei der zweiten Ausführungsform die Spanfläche 7 ausgehend von der Schneidkante 5 (bzw. einer an der Schneidkante 5 ausgebildeten Fase, sofern vorhanden) zunächst mit zunehmendem Abstand von der Schneidecke 5a in Richtung zu der Unterseite 3 ab. Ferner weist die Spanfläche 7, wie bei der ersten Ausführungsform, auch bei dem Schneideinsatz 101 gemäß der zweiten Ausführungsform einen Wulst 9 auf, der sich beabstandet von der Schneidkante 5 zwischen der Schneidkante 5 und dem Spangrund 8 erstreckt. Der Wulst 9 erstreckt sich dabei wiederum in Aufsicht bananenförmig entlang der Schneidecke 5a. Die Ausbildung und Positionierung des Wulstes 9 unterscheidet sich dabei nicht von der zuvor in Bezug auf die erste Ausführungsform beschriebenen Anordnung.

Wie insbesondere in Fig. 11 zu sehen ist, sind bei dem Schneideinsatz 101 gemäß der zweiten Ausführungsform jedoch im Bereich der Schneidecke 5a und der daran anschließenden Schneidkantenabschnitte 5b zusätzlich erhabene, spanformende Elemente 12 vorgesehen, die sich quer zu der Richtung der Schneidkante 5 in dem jeweiligen Bereich erstrecken. Diese spanformenden Elemente 12 können dabei insbesondere im Wesentlichen senkrecht zu dem jeweiligen Bereich der Schneidkante 5 verlaufen. Die spanformenden Elemente 12 bilden dabei in den Bereichen, in denen sie angeordnet sind, eine Erhöhung der Spanfläche 7 und des Spangrundes 8.

Die spanformenden Elemente 12 sind dabei in dem Bereich zwischen der Schneidkante 5 und der ansteigenden Flanke 10 angeordnet. Die spanformenden Elemente 12 weisen einen größeren Abstand zu der Schneidkante 5 auf, als der zuvor beschriebene bananenförmige Wulst 9. Die Oberfläche der spanformenden Elemente 12 verläuft relativ zu der Unterseite 3 auf einem niedrigeren Niveau als die Schneidkante 5 und auf einem niedrigeren Niveau als die höchste Erhebung des Wulstes 9.

Wie z.B. in Fig. 10 zu sehen ist, ist bei der zweiten Ausführungsform in einem zentralen Bereich der Schneidkante 5 zwischen benachbarten Schneidecken 5a ferner eine Mehrzahl von Spanbrechern 13 vorgesehen. Die Spanbrecher 13 sind als vorspringende Rippen ausgebildet, die beabstandet voneinander entlang der Schneidkante 5 angeordnet sind. Die Spanbrecher 13 erstrecken sich dabei jeweils quer über den Spangrund 8 von einem Bereich der Spanfläche 7 nahe der Schneidkante 5 bis in die an den Spangrund 8 anschließende ansteigende Flanke 10. Bei der konkreten Ausführungsform sind die Spanbrecher 13 dabei gleichmäßig voneinander beabstandet angeordnet und der Bereich nahe der Schneidecke 5a der an die Schneidecke 5a anschließenden Schneidkantenabschnitte 5b ist frei von diesen zusätzlichen Spanbrechern 13. Die zusätzlichen Spanbrecher 13 ermöglichen auch bei mittleren und gröberen Zerspanungsparametern eine vorteilhafte Spankontrolle.

Obwohl in Bezug auf die Ausführungsformen nur Schneideinsätze 1, 101 mit einer im Wesentlichen viereckigen Grundform und einer im Wesentlichen dreieckigen Grundform beschrieben wurden, sind auch andere polygonale Grundformen möglich. Z.B. kann der Schneideinsatz insbesondere auch eine in Aufsicht parallelogrammartige Grundform aufweisen.

Obwohl in Bezug auf die erste Ausführungsform keine zusätzlichen erhabenen, spanformenden Elemente 12 beschrieben wurden, die bei der zweiten Ausführungsform realisiert sind, ist es z.B. auch möglich, bei einer Ausgestaltung entsprechend der ersten Ausführungsform solche zusätzlichen erhabenen, spanformenden Elemente 12 vorzusehen, um einen bevorzugten Spanbruch zu ermöglichen. Ferner können auch bei einer Realisierung entsprechend der ersten Ausführungsform zusätzliche Spanbrecher 13 vorgesehen werden, wie sie in Bezug auf die zweite Ausführungsform beschrieben wurden.

## Patentansprüche

1. Schneideinsatz (1; 101) zur zerspanenden Drehbearbeitung eines Werkstücks mit:
einer Oberseite (2),
einer Unterseite (3),
einer umlaufenden Seitenfläche (4), und
zumindest einer zumindest an einer Schnittlinie zwischen der Oberseite (2) und der Seitenfläche (4) ausgebildeten Schneidkante (5),
wobei die Schneidkante (5) zumindest eine in Aufsicht auf die Oberseite (2) gerundete Schneidecke (5a) und beidseitig an die Schneidecke (5a) anschließende Schneidkantenabschnitte (5b) aufweist,
wobei die Oberseite (2) angrenzend an die Schneidkante (5) im Bereich der Schneidecke (5a) und der anschließenden Schneidkantenabschnitte (5b) als eine Spanfläche (7) ausgebildet ist, die mit zunehmendem Abstand von der Schneidkante (5) in Richtung der Unterseite (3) abfällt,
wobei die Spanfläche (7) einen vorspringenden, konvexen Wulst (9) aufweist, der sich beabstandet von der Schneidkante (5) im Bereich der Schneidecke (5a) erstreckt, und
sich die Spanfläche (7) auf einer von der Schneidkante abgewandten Seite des Wulstes (9) zu einem Spangrund (8) erstreckt, an dem die Spanfläche (7) einen geringeren Abstand zu der Unterseite (3) aufweist, als auf einer der Schneidkante (5) zugewandten Seite des Wulstes (9),
wobei sich in der Richtung von der Schneidkante (5) zum Inneren des Schneideinsatzes (1; 101) an den Spangrund (8) eine ansteigende Flanke (10) anschließt,
**dadurch gekennzeichnet, dass** sich der Wulst (9) in Aufsicht auf die Oberseite (2) bananenförmig im Bereich der Schneidecke (5a) bis in die Bereiche der anschließenden Schneidkantenabschnitte (5b) erstreckt.

2. Schneideinsatz nach Anspruch 1, wobei der Wulst (9) in Aufsicht auf die Oberseite (2) entlang der Schneidecke (5a) und der anschließenden Schneidkantenabschnitte (5b) in der Richtung senkrecht zur Schneidkante (7) eine im Wesentlichen gleichbleibende Breite aufweist.

3. Schneideinsatz nach einem der vorangehenden Ansprüche, wobei die ansteigende Flanke (10) auf ein Höhenniveau oberhalb der Höhe der Schneidkante (5) ansteigt.

4. Schneideinsatz nach einem der vorangehenden Ansprüche, wobei sich der Wulst (9) im Bereich der Schneidecke (5a) und der anschließenden Schneidkantenabschnitte (5b) im Wesentlichen parallel zu der Schneidkante (5) erstreckt.

5. Schneideinsatz nach einem der vorangehenden Ansprüche, wobei die Spanfläche (7) sowohl im Bereich der Schneidecke (5a) als auch in den Bereichen der anschließenden Schneidkantenabschnitte (5b) in einer Richtung senkrecht zu der Schneidkante (5) zum Inneren des Schneideinsatzes (1; 101) zunächst geneigt in Richtung der Unterseite (3) abfällt, an dem Wulst (9) die Neigung der Spanfläche (7) abnimmt oder die Spanfläche (7) wieder gegenüber der Unterseite (3) ansteigt und nach dem Wulst (9) die Spanfläche (7) bis zu dem Spangrund (8) in Richtung der Unterseite (3) abfällt.

6. Schneideinsatz nach einem der vorangehenden Ansprüche, wobei der Schneideinsatz (1; 101) in Aufsicht auf die Oberseite (2) eine im Wesentlichen polygonale Grundform mit einer Mehrzahl von nacheinander einsetzbaren Schneidecken (5a) mit jeweils beidseitig daran anschließenden Schneidkantenabschnitten (5b) aufweist.

7. Schneideinsatz nach einem der vorangehenden Ansprüche, wobei der Schneideinsatz (1; 101) in Aufsicht auf die Oberseite (2) eine im Wesentlichen dreieckige, viereckige oder parallelogrammartige Grundform aufweist.

8. Schneideinsatz nach einem der vorangehenden Ansprüche, wobei im Bereich der Schneidecke (5a) und/oder der anschließenden Schneidkantenabschnitte (5b) erhabene, spanformende Elemente (12) angeordnet sind, die sich quer zur Richtung der Schneidkante (5) erstrecken und jeweils eine Erhöhung der Spanfläche (7) und des Spangrundes (8) bilden.

9. Schneideinsatz nach Anspruch 8, wobei die spanformenden Elemente (12) auf der von der Schneidkante (5) abgewandten Seite des Wulstes (9) angeordnet sind.

## Claims

1. Cutting insert (1; 101) for chip-removing machining of a workpiece by turning, having:
an upper side (2),
a lower side (3),
a peripheral lateral face (4), and
at least one cutting edge (5) configured on at least an intersection of the upper side (2) and the lateral face (4),
wherein the cutting edge (5) has at least one cutting corner (5a) which in the plan view onto the upper side (2) is curved, and cutting edge portions (5b) which adjoin the cutting corner (5a) on both sides
wherein the upper side (2) adjacent to the cutting edge (5), in the region of the cutting corner (5a) and the adjoining cutting edge portions (5b), is configured as a chip face (7) which, as the spacing from the cutting edge (5) increases, slopes downwards in the direction of the lower side (3),
wherein the chip face (7) has a projecting convex bulge (9) which in the region of the cutting corner (5a) extends so as to be spaced apart from the cutting edge (5), and
the chip face (7), on a side of the bulge (9) that faces away from the cutting edge, extends towards a chip base (8) at which the chip face (7) has a smaller spacing from the lower side (3) than on a side of the bulge (9) that faces the cutting edge (5),
wherein an ascending flank (10) adjoins the chip base (8) in the direction from the cutting edge (5) towards the interior of the cutting insert (1; 101),
**characterized in that** the bulge (9), in the plan view onto the upper side (2), in the region of the cutting edge (5a) extends in a banana-shaped manner into the regions of the adjoining cutting edge portions (5b).

2. Cutting insert according to Claim 1, wherein the bulge (9), in the plan view onto the upper side (2), along the cutting corner (5a) and the adjoining cutting edge portions (5b) in the direction perpendicular to the cutting edge (7) has a substantially consistent width.

3. Cutting insert according to one of the preceding claims, wherein the ascending flank (10) ascends to a height level above the height of the cutting edge (5) .

4. Cutting insert according to one of the preceding claims, wherein the bulge (9) in the region of the cutting corner (5a) and the adjoining cutting edge portions (5b) extends so as to be substantially parallel to the cutting edge (5).

5. Cutting insert according to one of the preceding claims, wherein the chip face (7), in the region of the cutting corner (5a) as well as in the regions of the adjoining cutting edge portions (5b) in a direction perpendicular to the cutting edge (5) towards the interior of the cutting insert (1; 101), is initially inclined so as to slope downwards in the direction of the lower side (3), the inclination of the chip face (7) decreasing at the bulge (9), or the chip face (7) again ascending in relation to the lower side (3) at the bulge (9), and the chip face (7) after the bulge (9) sloping downwards to the chip base (8) in the direction of the lower side (3) .

6. Cutting insert according to one of the preceding claims, wherein the cutting insert (1; 101) in the plan view onto the upper side (2) has a substantially polygonal basic shape having a plurality of successively usable cutting corners (5a) having in each case cutting edge portions (5b) adjoining said cutting corners (5a) on both sides.

7. Cutting insert according to one of the preceding claims, wherein the cutting insert (1; 11) in the plan view onto the upper side (2) has a substantially triangular, quadrangular or rhomboidal basic shape.

8. Cutting insert according to one of the preceding claims, wherein raised, chip-forming elements (12) which extend transversely to the direction of the cutting edge (5) and form in each case an elevation of the chip face (7) and of the chip base (8) are disposed in the region of the cutting corner (5a) and/or of the adjoining cutting edge portions (5b).

9. Cutting insert according to Claim 8, wherein the chip-forming elements (12) are disposed on that side of the bulge (9) that faces away from the cutting edge (5).

## Revendications

1. Insert de coupe (1; 101) destiné au tournage d'une pièce avec enlèvement de copeaux, ledit insert de coupe comprenant :
une face supérieure (2),
une face inférieure (3),
une surface latérale périphérique (4), et
au moins une arête coupante (5) formée au moins sur une ligne d'intersection entre la face supérieure (2) et la surface latérale (4),
l'arête coupante (5) comportant au moins un coin coupant (5a) arrondi en vue de dessus de la face supérieure (2) et des portions d'arête coupante (5b) se raccordant des deux côtés au coin coupant (5a),
la face supérieure (2) adjacente à l'arête coupante (5) dans la région du coin coupant (5a) et les des portions d'arête coupante adjacentes (5b) étant conçue comme une face d'attaque (7) qui descend en direction de la face inférieure (3) à mesure que la distance à l'arête coupante (5) croît,
la face d'attaque (7) comportant un bourrelet convexe saillant (9) qui s'étend dans la région du coin coupant (5a) à distance de l'arête coupante (5), et
la face d'attaque (7) s'étendant, sur un côté du bourrelet (9) qui est opposé à l'arête coupante, vers une base d'attaque (8) au niveau de laquelle la face d'attaque (7) est à une plus petite distance de la face inférieure (3) que sur un côté du bourrelet (9) qui est dirigé vers l'arête coupante (5),
un flanc montant (10) se raccordant à la base d'attaque (8) dans la direction allant de l'arête coupante (5) à l'intérieur de l'insert de coupe (1 ; 101),
**caractérisé en ce que**, en vue de dessus de la face supérieur (2), le bourrelet (9) s'étend jusque dans les régions d'arête coupante adjacentes (5b) sous la forme d'une banane dans la région du coin coupant (5a).

2. Insert de coupe selon la revendication 1, dans une vue de dessus de la face supérieure (2), le bourrelet (9) ayant une largeur sensiblement constante dans la direction perpendiculaire à l'arête coupante (7) le long du coin coupant (5a) et des portions d'arête coupante adjacentes (5b).

3. Insert de coupe selon l'une des revendications précédentes, le flanc montant (10) s'élevant à un niveau en hauteur situé au-dessus de la hauteur de l'arête coupante (5).

4. Insert de coupe selon l'une des revendications précédentes, le bourrelet (9) s'étendant sensiblement parallèlement à l'arête coupante (5) dans la région du coin coupant (5a) et des portions d'arête coupante adjacentes (5b).

5. Insert de coupe selon l'une des revendications précédentes, aussi bien dans la région du coin coupant (5a) que dans les régions des portions d'arête coupante adjacentes (5b), la face d'attaque (7) descendant dans une direction perpendiculaire à l'arête coupante (5) vers l'intérieur de l'insert de coupe (1; 101) en étant initialement inclinée en direction de la face inférieure (3), l'inclinaison de la face d'attaque (7) diminuant au niveau du bourrelet (9) ou la face d'attaque (7) s'élevant de nouveau par rapport à la face inférieure (3) et, après le bourrelet (9), la face d'attaque (7) descendant jusqu'à la base d'attaque (8) en direction de la face inférieure (3).

6. Insert de coupe selon l'une des revendications précédentes, dans une vue de dessus de la face supérieure (2), l'insert de coupe (1 ; 101) ayant une forme de base sensiblement polygonale pourvue d'une pluralité de coins coupants (5a) qui peuvent être utilisés les uns après les autres et qui comportent chacun des portions d'arête coupante (5b) adjacentes des deux côtés.

7. Insert de coupe selon l'une des revendications précédentes, dans une vue de dessus de la face supérieure (2), l'insert de coupe (1 ; 101) ayant une forme de base sensiblement triangulaire, carrée ou de type parallélogramme.

8. Insert de coupe selon l'une des revendications précédentes, des éléments surélevés (12), formant des copeaux, étant disposés dans la région du coin coupant (5a) et/ou des portions d'arête coupante adjacentes (5b), s'étendant transversalement à la direction de l'arête coupante (5) et formant chacun une élévation de la face d'attaque (7) et de la base d'attaque (8).

9. Insert de coupe selon la revendication 8, les éléments (12) formant des copeaux étant disposés sur le côté du bourrelet (9) qui est opposé à l'arête coupante (5) .
